(19)

Europäisches
Patentamt
European
Patent Office
Office européen
des brevets

(11)  **EP 2 624 162 A1**

(12)  **EUROPEAN PATENT APPLICATION**
published in accordance with Art. 153(4) EPC

(43) Date of publication:
07.08.2013   Bulletin 2013/32

(21) Application number: **12771486.3**

(22) Date of filing: **13.04.2012**

(51) Int Cl.:
*G06F 21/20* (0000.00)      *H04M 1/67* (2006.01)

(86) International application number:
**PCT/JP2012/060128**

(87) International publication number:
**WO 2012/141288 (18.10.2012 Gazette 2012/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **15.04.2011   JP 2011090669**

(71) Applicant: **NTT DOCOMO, INC.**
**Chiyoda-ku,**
**Tokyo 100-6150 (JP)**

(72) Inventors:
• **OTA, Manabu**
**Tokyo 100-6150 (JP)**

• **TSUKAMOTO, Masakatsu**
**Tokyo 100-6150 (JP)**
• **MORINAGA, Yasuo**
**Tokyo 100-6150 (JP)**
• **HIGUCHI, Takeshi**
**Tokyo 100-6150 (JP)**

(74) Representative: **MERH-IP**
**Matias Erny Reichl Hoffmann**
**Paul-Heyse-Strasse 29**
**80336 München (DE)**

(54)  **PORTABLE TERMINAL, AND GRIP CHARACTERISTIC LEARNING METHOD**

(57)     A portable terminal includes a gripping-feature sample acquisition section that acquires a gripping feature sample from a sensor array; a former-template storage that stores an old authentication template in a portable terminal used in the past, as a former template; a feature-segment extracting section that extracts a feature segment from the former template and calculates a distance between the former template and the gripping feature sample in each feature segment; a segment-position correcting section that applies deformation correction to the former template in a feature segment in which the distance calculated by the feature-segment extracting section is longer than a predetermined value, to generate a corrected template; a template comparison section that compares the corrected template with the acquired gripping feature sample and calculates an inter-vector distance therebetween; and a template storage that stores the corrected template as an authentication template when the inter-vector distance is equal to or shorter than a predetermined value.

FIG. 14

**Description**

TECHNICAL FIELD

The present invention relates to a portable terminal and a gripping-feature learning method that acquire a gripping feature sample when the portable terminal is gripped and perform authentication.

BACKGROUND ART

Recently, various types of financial services, such as electronic money, have become more widespread as portable terminals have gained higher functionality. In addition, as portable terminals have gained higher functionality, the terminals have been used to store many pieces of private information, such as addresses, emails, photos, and website browsing history. Conventionally, security for information handled with portable terminals has been maintained by means of authentication (hereafter called log-in authentication) performed when starting to use the portable terminals. In log-in authentication, however, once authentication has been performed when the terminal starts to be used, whether the user is the person who authenticated is not continuously monitored. Therefore, if the portable terminal is used by another person for some reason after log-in authentication, the other person can operate the portable terminal without performing log-in authentication. Such a security vulnerability with log-in authentication has been a problem. To solve this problem, Patent Literature 1 discloses a portable terminal in which the positions where the user using the terminal grips the terminal when performing authentication are acquired by a plurality of pressure sensors; then if, after authentication, the positions where the user grips the terminal are changed by a specified distance or more, the required data input by the user to use a service is invalidated and the validity of the authentication already performed is cancelled. Therefore, even if the terminal is stolen during the act of inputting data required to use a service after authentication, the authentication and the data input by the user are invalidated when the user's hand is separated from the terminal. To use a service after the authentication is invalidated, it is necessary to perform authentication again. Therefore, this terminal can effectively prevent unauthorized use by a third party.

CITATION LIST

Patent Literature

Patent literature 1: Japanese Patent Application Laid Open No. 2001-142849

DISCLOSURE OF THE INVENTION

PROBLEMS TO BE SOLVED BY THE INVENTION

In authentication methods using biometric information (gripping feature), such as that used in Patent Literature 1, information called a template formed of a sequence of gripping pressure values that are characteristic to a person is obtained by learning from an acquired gripping pressure distribution (a sequence of gripping pressure values) and registered in advance, and a sample of a sequence of gripping pressure values (hereafter called a gripping feature sample or simply a sample) acquired by sensors during authentication is compared with the registered template. This comparison is performed by using many pattern recognition technologies. In pattern recognition, how close a sample is to the template is obtained by using the distance between vectors. In biometric authentication, Mahalanobis's generalized distance and the Hamming distance are often used. When the distance exceeds a predetermined threshold, it is determined that the sample was obtained from another person; and when the distance is within the threshold, it is determined that the sample was obtained from the person in question. However, when the portable terminal is changed to another one, the external shape of the portable terminal may change, or the arrangement of operating keys may change. Therefore, the gripping features change, and the template used for authentication (hereafter called authentication template) cannot be reused. Consequently, the authentication template should be learned again every time the portable terminal is changed, impairing the user convenience. In addition, while the authentication template is being learned after the portable terminal is changed, another method, such as a password, needs to be used to maintain the security of the new portable terminal, impairing the user convenience. Taking these situations into consideration, an object of the present invention is to provide a portable terminal capable of reusing the authentication template used in an old portable terminal used before that portable terminal.

MEANS TO SOLVE THE PROBLEMS

A portable terminal of the present invention acquires a gripping feature sample when the user grips the terminal from a sensor array formed of a plurality of sensors and performs authentication by using a former authentication template. The portable terminal includes a gripping-feature sample acquisition section, a former-template storage, a feature-segment extracting section, a segment-position correcting section, a template comparison section, and a template storage. The gripping-feature sample acquisition section acquires the gripping feature sample from the sensor array. The former-template storage stores an old authentication template used for authentication in a portable terminal used in the past, as a former template. The feature-segment extracting section extracts a feature segment from the former template, compares the former template with the gripping feature sample in each feature segment, and calculates a distance therebetween. The segment-position correcting section applies deformation correction to the former template in a feature segment in which the distance calculated by the feature-segment extracting section is longer than a predetermined value, to generate a corrected template. The template comparison section compares the corrected template with the acquired gripping feature sample and calculates an inter-vector distance therebetween. The template storage stores the corrected template as the authentication template when the inter-vector distance between the corrected template and the acquired gripping feature sample is equal to or shorter than a predetermined value.

EFFECTS OF THE INVENTION

According to a portable terminal of the present invention, since the authentication template used in an old portable terminal used before the portable terminal can be reused in the portable terminal, it is not necessary to perform learning of an authentication template every time the portable terminal is changed, increasing the user convenience.

BRIEF DESCRIPTION OF THE DRAWINGS

Fig. 1 is a view showing a portable terminal 800a provided with pressure sensor arrays;
Fig. 2 is a view showing a portable terminal 800b provided with pressure sensor arrays;
Fig. 3 is a view showing a state in which the portable terminal 800a is gripped;
Fig. 4 is a view showing a state in which the portable terminal 800b is gripped;
Fig. 5 is a view showing a state in which the portable terminal 800b' is gripped;
Fig. 6 is a view showing a portable terminal 800c provided with pressure sensor arrays;
Fig. 7 is a view showing a portable terminal 800d provided with pressure sensor arrays;
Fig. 8 is a view showing a state in which the portable terminal 800c is gripped;
Fig. 9 is a view showing a state in which the portable terminal 800d is gripped;
Fig. 10A is an example view of an authentication template before the portable terminal is changed in a case when the sensor positions are different before and after the portable terminal is changed;
Fig. 10B is an example view of a gripping feature sample acquired after the portable terminal is changed;
Fig. 11A is a view explaining interpolation performed by a sensor position correcting section;
Fig. 11B is a view showing a template corrected by the interpolation;
Fig. 12A is an example view of an authentication template before the portable terminal is changed in a case when the gripping state is different before and after the portable terminal is changed;
Fig. 12B is an example view of a gripping feature sample acquired after the portable terminal is changed;
Fig. 13A is a view explaining feature-segment extraction performed by a feature-segment extracting section;
Fig. 13B is a view explaining deformation correction performed by a segment-position correcting section;
Fig. 14 is a block diagram showing the configuration of a portable terminal according to a first embodiment;
Fig. 15 is a block diagram showing the configuration of a portable terminal according to a second embodiment;
Fig. 16 is a flowchart of how a former template is reused in the portable terminal according to the first embodiment;
Fig. 17 is a flowchart of how an authentication template is learned in the portable terminal according to the first embodiment;
Fig. 18 is a flowchart of authentication in the portable terminal according to the first embodiment; and
Fig. 19 is a flowchart of how a former template is reused in the portable terminal according to the second embodiment.

BEST MODES FOR CARRYING OUT THE INVENTION

Now, embodiments of the present invention will be described in detail. Components having the same functions are assigned the same numbers, and a description thereof will be given just once.

Gripping feature sample

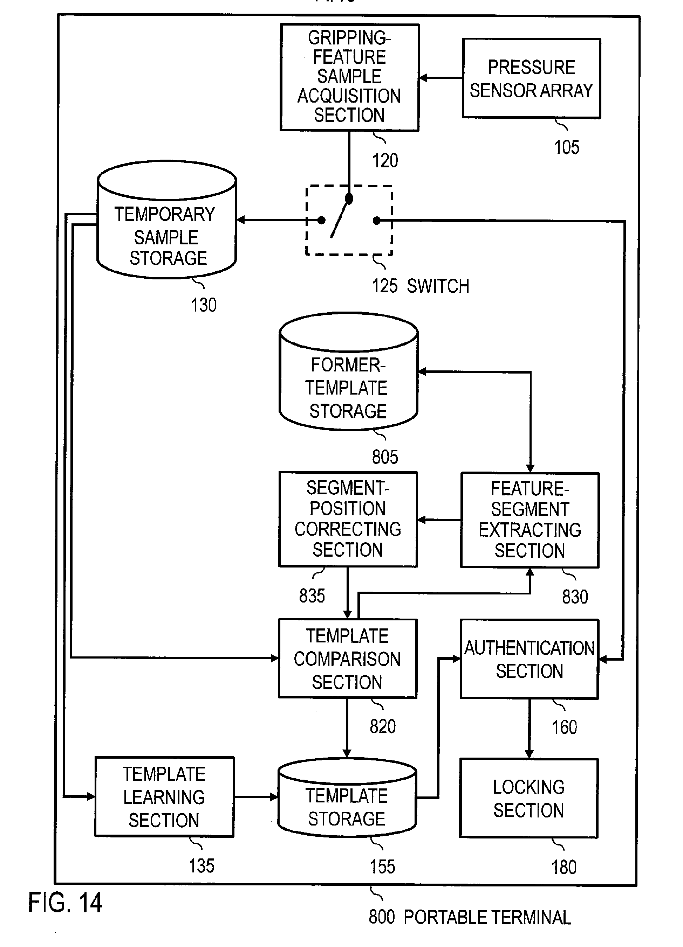

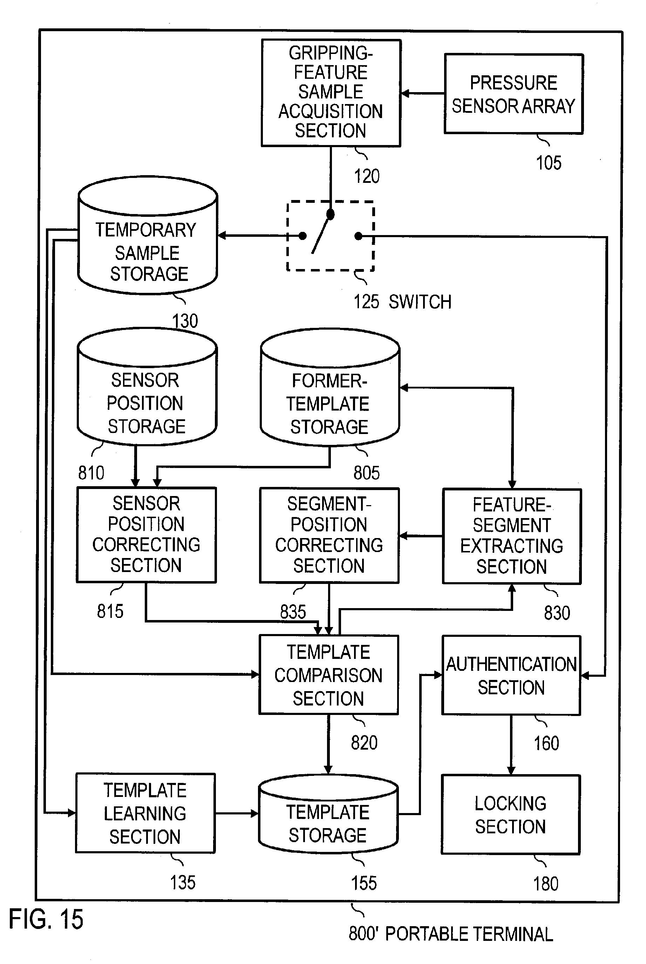

First, gripping feature samples to be acquired by portable terminals 800 and 800' according to all embodiments of the present invention will be described, the functional blocks of the portable terminals 800 and 800' being shown in Fig. 14 and Fig. 15, respectively. Since human beings are innately different in (1) the lengths of their fingers and (2) the strength of their gripping force, and, as an acquired nature, (3) in the habit of gripping a portable terminal, gripping features are highly suited as biometric information used for authentication. More specifically, gripping feature authentication has almost the same level of precision as general face authentication in terms of the authorized person rejection rate and the unauthorized person acceptance rate. Gripping feature samples can include, for example, a gripping pressure distribution, a gripping shape distribution and a gripping heat distribution. As an example method of acquiring these gripping feature samples, when a plurality of pressure sensors are distributed two dimensionally or in a straight line on a surface of each of the portable terminals 800 and 800', the gripping pressure distribution can be acquired.

In the same manner, when CCD (CMOS) sensors are distributed two dimensionally or in a straight line, the gripping shape distribution can be obtained. In the same manner, when infrared sensors are distributed two dimensionally or in a straight line, the gripping heat distribution can be obtained. When a portable terminal has operating keys (touch sensitive panel) at the rear surface thereof, gripping features can be acquired even from the pressing states (whether the operating keys or the touch sensitive panel is pressed) of the operating keys (touch sensitive panel) when the terminal is gripped. In the following descriptions of the embodiments, a gripping pressure distribution will be used as a gripping feature sample. Pressure sensor arrays are disposed in a straight line on the outer circumference of each of the terminal apparatuses 800 and 800', and a sequence of pressure values acquired by the pressure sensor arrays at respective positions and arranged in a predetermined order is used as a gripping feature sample.

Acquisition timing of gripping feature samples

Gripping feature samples may be acquired at the same time as when a sampling trigger is generated. The sampling trigger indicates the predetermined acquisition timing of a gripping feature sample. For example, to acquire a gripping feature sample when browser software of the portable terminal 800 or 800' is being operated, the sampling trigger can be set to "browser in operation ∩ pressing OK key". This means that, when the user presses an OK key on the portable terminal 800 or 800' if the browser is in operation, this operation is used as the sampling trigger, and a gripping feature sample is immediately acquired. To acquire a gripping feature sample while a call is being made, in which operating keys such as the OK key are not pressed much, the sampling trigger may be set to "once every three minutes" and generated automatically every three minutes of call time to acquire a gripping feature sample, for example.

The following advantages are achieved when the sampling trigger is used in the way described above to acquire a gripping feature sample required for learning an authentication template. When the sampling trigger is used, gripping feature samples are automatically acquired and accumulated at the acquisition timing when the user performs unconscious key operations. By doing so, gripping feature samples can be acquired in a state in which the user uses the terminal unconsciously and most spontaneously, in a relaxed manner. By doing so, the variance of observed values in gripping feature samples can be made small. If the start of acquisition of gripping feature samples is indicated by a message in the operating instructions shown on the portable terminal, the user would be on guard when receiving the message, and may grip the terminal not in a usual way but in a way that the user thinks is correct. The user may forget the usual way of gripping the terminal when receiving the message in advance. This would make the acquisition of precise gripping feature samples difficult. This problem can be solved and the acquisition of precise gripping feature samples is made possible if gripping feature samples can be acquired while the user is unconscious of the acquisition, as described above.

Authentication template

An authentication template used for authentication by the portable terminals 800 and 800' according to all the embodiments of the present invention will be described in detail. The authentication template is a pattern representatively expressing the gripping feature of the user. The authentication template is learned from the average values of the gripping feature samples acquired from the user, described earlier. The learned authentication template is compared with a gripping feature sample acquired newly after learning. According to the magnitude of a value calculated from the comparison (the distance between vectors, for example, Mahalanobis's generalized distance), it is determined whether the gripping feature sample acquired newly after learning was obtained from the person whose sample was used to generate the authentication template.

Some examples of the distance serving as the above-described authentication determination criterion will be explained below. It is assumed here, for example, that a pressure value $X_{i,j}$ was acquired from the i-th sensor in the j-th measurement performed for learning, where i = 1, 2, ..., n, j = 1, 2, ..., m, n indicates the number of sensors and is an integer equal to 2 or more, and m indicates the number of gripping feature measurements for learning and is an integer equal to 2 or more. The average of the pressure values, the variance, and the vectors of the average and the variance are defined as follows:

$$\overline{x}_i = \frac{1}{m}\left(\sum_{j=1}^{m} x_{i,j}\right) \qquad (1)$$

$$s_i^2 = \frac{1}{m}\sum_{j=1}^{m}(\overline{x}_i - x_{i,j})^2 \qquad (2)$$

$$X = (\overline{x}_1, \overline{x}_2, \cdots, \overline{x}_n); \quad S^2 = (s_1^2, s_2^2, \cdots, s_n^2) \qquad (3)$$

The average vector of gripping feature samples is used as an authentication template. The authentication template is indicated with a subscript "le". Mahalanobis's generalized distance $f_1$ is given by the following expression.

$$f_1 = \left[\sum_{i=1}^{n}\left(\frac{x_i - {}_{le}\overline{x}_i}{s_i}\right)^2\right]^{1/2} \qquad (4)$$

As another example distance, the Euclid distance $f_2$ can be defined by the following expression.

$$f_2 = \left[\sum_{i=1}^{n}(x_i - {}_{le}\overline{x}_i)^2\right]^{1/2} \qquad (5)$$

As still another example distance, the Manhattan distance $f_3$ can be defined by the following expression.

$$f_3 = \sum_{i=1}^{n}|x_i - {}_{le}\overline{x}_i| \qquad (6)$$

These three distances can be used to perform authentication with the same determination expression shown below. Data of the authentication target, acquired for determination, is indicated with a subscript "self", and data of other people is indicated with a subscript "oth". When the threshold used to detect other people is defined as $X_{thre}$, the following

expression can be used to detect other people.
$$x_{thre} <_{oth} f \qquad\qquad (7)$$

Portable terminals 800a, 800b, 800b', 800c, and 800d

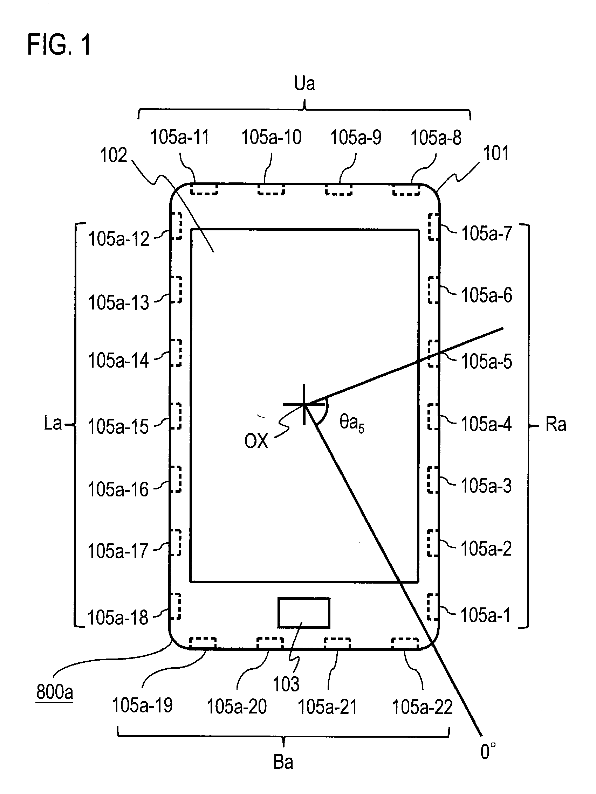

Figs. 1, 2, 5, 6, and 7 show specific example shapes of portable terminals 800a, 800b, 800b', 800c, and 800d of different models, respectively. The portable terminals 800a, 800b, 800b', 800c, and 800d all have the functions of either of the portable terminals 800 and 800' according to the embodiments of the present invention.

Reference point used to identify sensor positions in the present specification

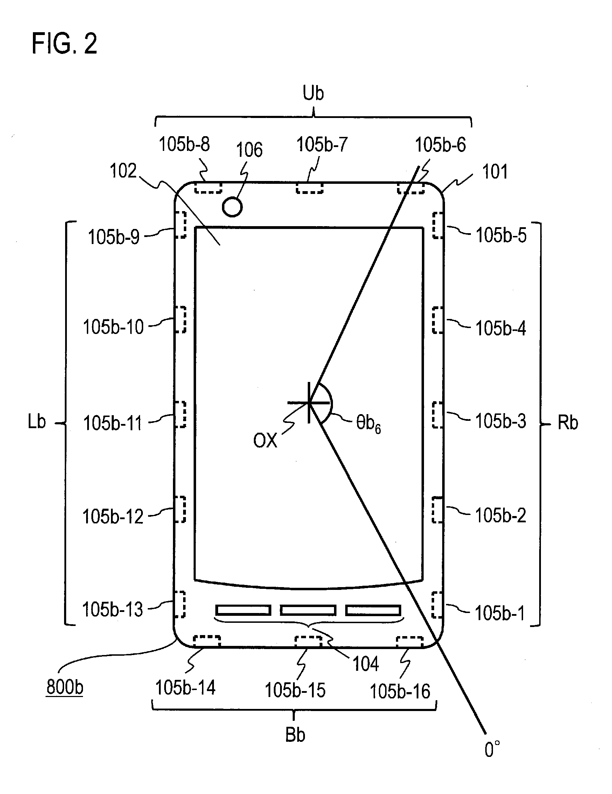

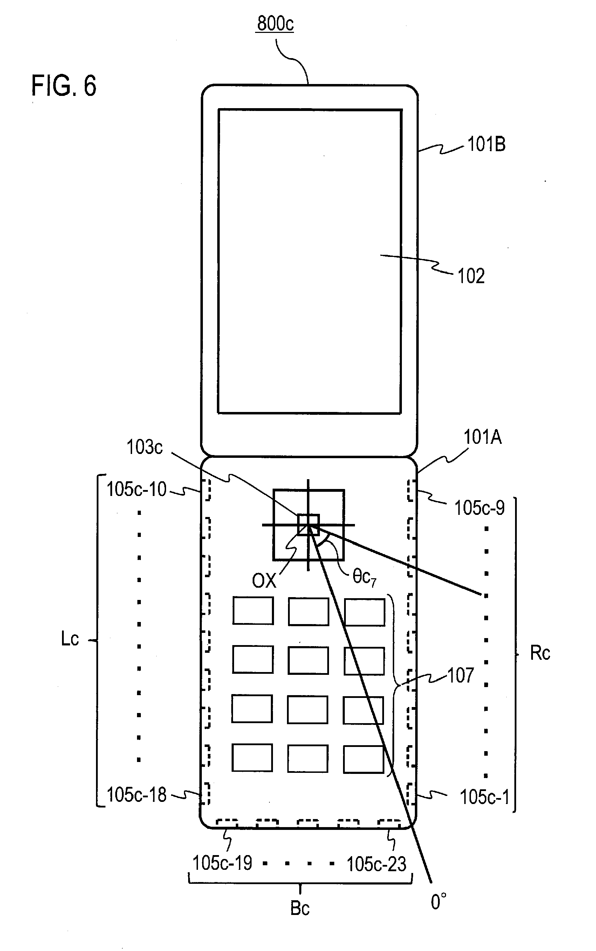

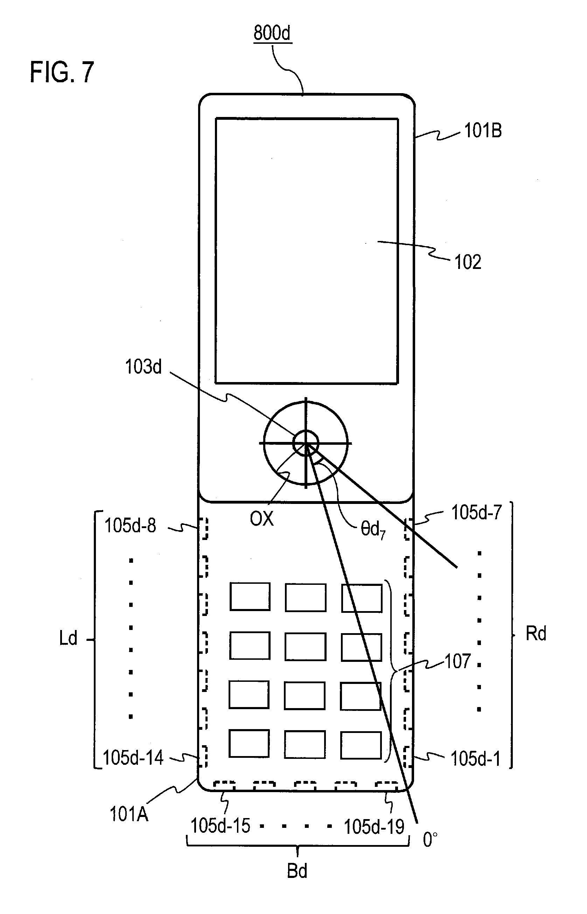

A reference point used to identify sensor positions in the present invention will be described with reference to Figs. 1, 2, 6, and 7. It is assumed in the present specification that the portable terminals 800a and 800b shown in Figs. 1 and 2 are different models of smart phones. It is also assumed that the portable terminals 800c and 800d shown in Figs. 6 and 7 are not smart phones but an older-generation folding-type portable terminal and sliding-type portable terminal.

The portable terminal 800a shown in Fig. 1 has a body 101 having almost a rectangular plate shape. On an upper surface of the body 101, a rectangular display surface 102 functioning as a touch sensitive panel and a key 103 are provided. In addition, the body 101 is provided with a pressure sensor array Ra at the right side face, a pressure sensor array Ua at the upper face, a pressure sensor array La at the left side face, and a pressure sensor array Ba at the bottom face. In the present description, the pressure sensor array Ra includes seven pressure sensors 105a-1to 105a-7, the pressure sensor array Ua includes four pressure sensors 105a-8 to 105a-11, the pressure sensor array La includes seven pressure sensors 105a-12 to 105a-18, and the pressure sensor array Ba includes four pressure sensors 105a-19 to 105a-22. In the following description, when the sensor arrays Ra, Ua, La, and Ba are not specified, the sensor array means all of the sensor arrays. In the present invention, the arrangement and number of sensors can be specified in a desired manner and are not limited to those shown in Fig. 1. The arrangement of the sensors in Fig. 1 is merely an example to make the following description easy to understand.

When the portable terminals 800 and 800' of the present invention, the functional blocks thereof being shown in Figs. 14 and 15, are smart phones, like the portable terminal 800a shown in Fig. 1, a reference point OX used to identify sensor positions can be set, for example, to the intersection (the position indicated by a cross in Fig. 1) of the diagonal lines of the touch sensitive panel (the display surface 102). The position of each pressure sensor can be indicated, for example, by the angle (measured counterclockwise) formed by the straight line passing through the reference point OX and the lower right corner of the body 101 and the straight line passing through the reference point OX and the center of the pressure sensor, with the reference point OX being used as the vertex, as shown in Fig. 1. In the present specification, the angle identifying the position of the t-th (t is a natural number) pressure sensor 105a-t of the portable terminal 800a is indicated by the angle $\theta a_t$. Therefore, the angle identifying the position of the fifth pressure sensor 105a-5 of the pressure sensor array Ra is indicated by the angle $\theta a_5$, as shown in Fig. 1.

The portable terminal 800b shown in Fig. 2 has a body 101 having almost a rectangular plate shape, like the portable terminal 800a shown in Fig. 1. On an upper surface of the body 101, a rectangular display surface 102 functioning as a touch sensitive panel, a plurality of keys 104, and a camera lens 106 are provided. In addition, the body 101 is provided with a pressure sensor array Rb formed of five pressure sensors 105a-1 to 105b-5 at the right side face, a pressure sensor array Ub formed of three pressure sensors 105b-6 to 105b-8 at the upper face, a pressure sensor array Lb formed of five pressure sensors 105b-9 to 105b-13 at the left side face, and a pressure sensor array Bb formed of three pressure sensors 105b-14 to 105b-16 at the bottom face.

A reference point OX used to identify sensor positions can be set, for example, to the intersection (the position indicated by a cross in Fig. 1) of the diagonal lines of the touch sensitive panel (the display surface 102). The position of each pressure sensor can be indicated, for example, by the angle (measured counterclockwise) formed by the straight line passing through the reference point OX and the lower right corner of the body 101 and the straight line passing through the reference point OX and the center of the pressure sensor, with the reference point OX being used as the vertex, as shown in Fig. 2. For example, the angle identifying the position of the t-th (t is a natural number) pressure sensor 105b-t of the portable terminal 800b is indicated by the angle $\theta b_t$. Therefore, the angle identifying the position of the sixth pressure sensor 105b-6 of the pressure sensor array Rb is indicated by the angle $\theta b_6$, as shown in Fig. 2.

It is assumed that the portable terminals 800 and 800' of the present invention, the functional blocks thereof being shown in Figs. 14 and 15, are older-generation folding-type portable terminals, such as the portable terminal 800c shown in Fig. 6. The portable terminal 800c has a body 101A having almost a rectangular plate shape and a cover 101B having a rectangular plate shape mounted to one short side of the body 101A in a foldable manner. On an inner surface of the cover 101B, a rectangular display surface 102 is provided. On an upper surface of the body 101A, an OK key 103c is provided at the center in the horizontal direction, close to the cover 101B, and input keys 107 are provided therebelow. In addition, the body 101A is provided with a pressure sensor array Rc formed of nine pressure sensors 105a-1 to 105c-9 at the right side face, a pressure sensor array Lc formed of nine pressure sensors 105c-10 to 105c-18 at the left side face, and a pressure sensor array Bc formed of five pressure sensors 105c-19 to 105c-23 at the bottom face.

A reference point OX used to identify sensor positions can be set, for example, to the center of the OK key 103c (the position indicated by a cross in Fig. 6). In the same manner as shown in Fig. 1, the position of each pressure sensor can be indicated, for example, by the angle (measured counterclockwise) formed by the straight line passing through the reference point OX and the lower right corner of the body 101A and the straight line passing through the reference point OX and the center of the pressure sensor, with the reference point OX being used as the vertex, as shown in Fig. 6. The angle identifying the position of the t-th pressure sensor 105c-t of the portable terminal 800c is indicated by the angle $\theta c_t$. Therefore, the angle identifying the position of the seventh pressure sensor 105c-7 is indicated by the angle $\theta c_7$, as shown in Fig. 6.

It is assumed that the portable terminals 800 and 800' of the present invention, the functional blocks thereof being shown in Figs. 14 and 15, are older-generation sliding-type portable terminals, such as the portable terminal 800d shown in Fig. 7. The portable terminal 800d has a body 101A having almost a rectangular plate shape and a cover 101B having a rectangular plate shape mounted on the body 101A in a slidable manner. On an outer surface of the cover 101B, a rectangular display surface 102 and an OK key 103d are provided. On an upper surface of the body 101A, input keys 107 are provided. In addition, the body 101A is provided with a pressure sensor array Rd formed of seven pressure sensors 105a-1 to 105d-7 at the right side face, a pressure sensor array Ld formed of seven pressure sensors 105d-8 to 105d-14 at the left side face, and a pressure sensor array Bd formed of five pressure sensors 105d-15 to 105d-19 at the bottom face.

A reference point OX used to identify sensor positions can be set, for example, to the center of the OK key 103d (the position indicated by a cross in Fig. 7). In the same manner as shown in Fig. 1, the position of each pressure sensor can be indicated, for example, by the angle (measured counterclockwise) formed by the straight line passing through the reference point OX and the lower right corner of the body 101A and the straight line passing through the reference point OX and the center of the pressure sensor, with the reference point OX being used as the vertex, as shown in Fig. 7. The angle identifying the position of the t-th pressure sensor 105d-t of the portable terminal 800d is indicated by the angle $\theta d_t$. Therefore, the angle identifying the position of the seventh pressure sensor 105d-7 is indicated by the angle $\theta d_7$, as shown in Fig. 7.

Changing the portable terminal

An object of the portable terminals 800 and 800' of the present invention is to reuse the authentication template used in the portable terminal when the portable terminal is changed. The change of the portable terminal includes a case where the portable terminal is changed to a different model while the contract with the same communication company continues; a case where the portable terminal is changed to a different model at the same time as a new contract is made with a different communication company, and a case where the portable terminal is temporarily changed to a replacement rented from the communication company if the portable terminal is left with the communication company because it is out of order or for some other reason.

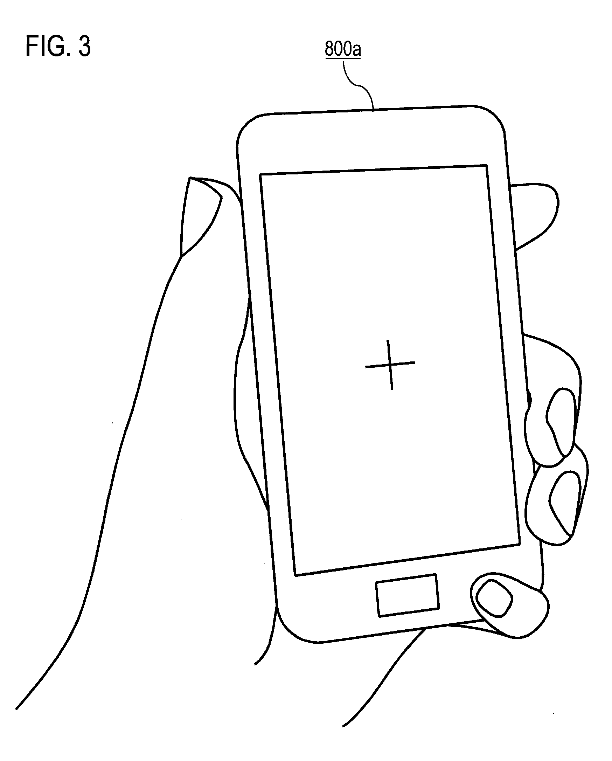

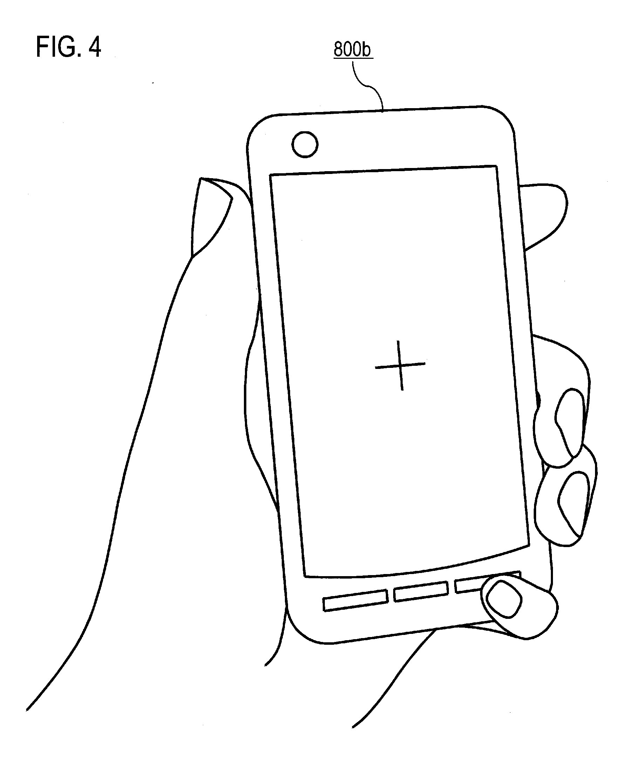

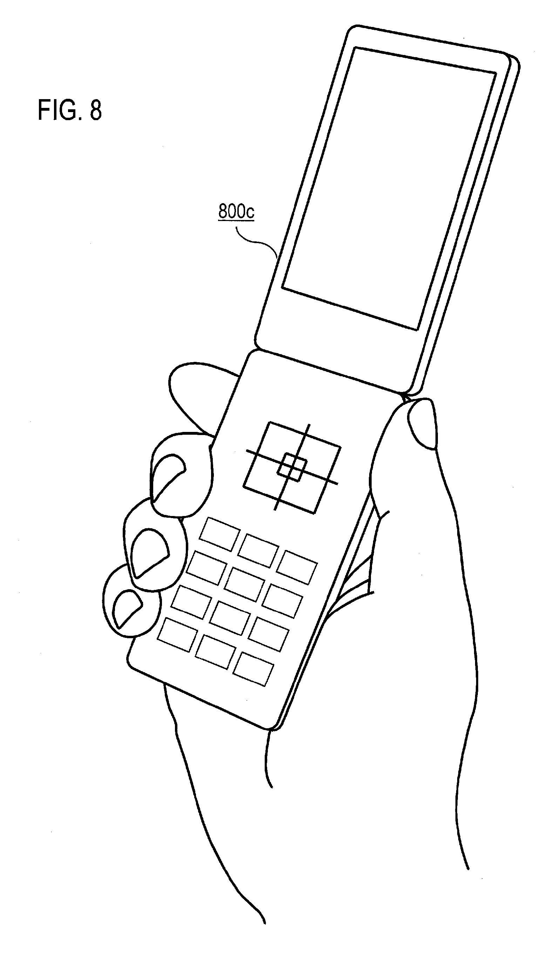

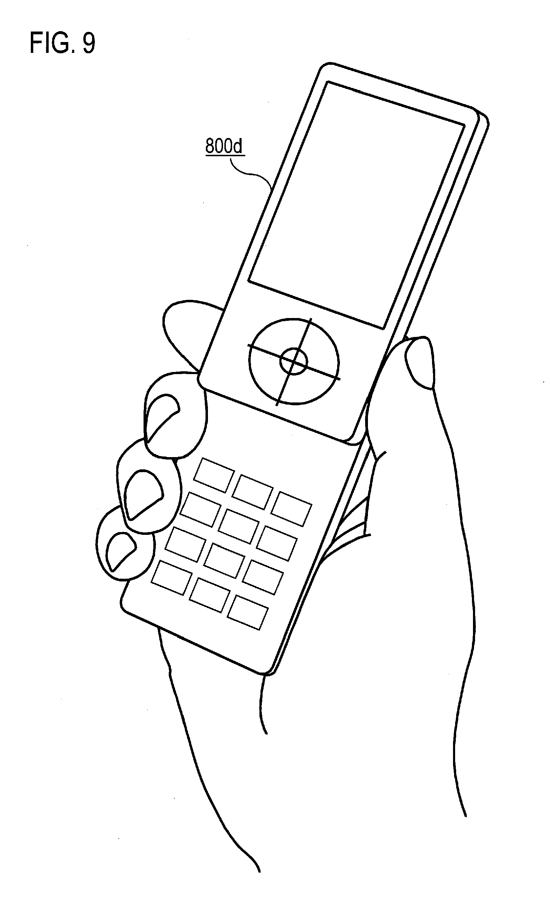

Changing the portable terminal, which the present invention handles, will be concretely described with reference to Figs. 3, 4, 8, and 9. Fig. 3 is a view showing a state in which the portable terminal 800a shown in Fig. 1 is gripped. Fig. 4 is a view showing a state in which the portable terminal 800b shown in Fig. 2 is gripped. Fig. 8 is a view showing a state in which the portable terminal 800c shown in Fig. 6 is gripped. Fig. 9 is a view showing a state in which the portable terminal 800d shown in Fig. 7 is gripped. The portable terminals 800a and 800b are smart phones. The portable terminals 800c and 800d are not smart phones but older-generation portable terminals. When the portable terminal 800a is changed to the portable terminal 800b, both being smart phones, the gripping features do not change much if compared with the center of the touch sensitive panel (the point indicated by a cross) being used as a reference, as shown in Figs. 3 and 4. A smart phone is usually gripped with the hand other than the dominant hand and is operated with the dominant hand on the touch sensitive panel, because of the operating characteristics. Therefore, if the right hand is the dominant hand, the smart phone is usually gripped with the left hand, as shown in Figs. 3 and 4. When the portable terminal 800c is changed to the portable terminal 800d, both being not smart phones but older-generation portable terminals, the gripping features do not change much if compared with the center of the OK key (the point indicated by a cross) being used as a reference, as shown in Figs. 8 and 9. An older-generation portable terminal is usually gripped with the dominant hand. Therefore, if the right hand is the dominant hand, the portable terminal is usually gripped with the right hand, as shown in Figs. 8 and 9.

Changes in gripping states before and after the portable terminal is changed

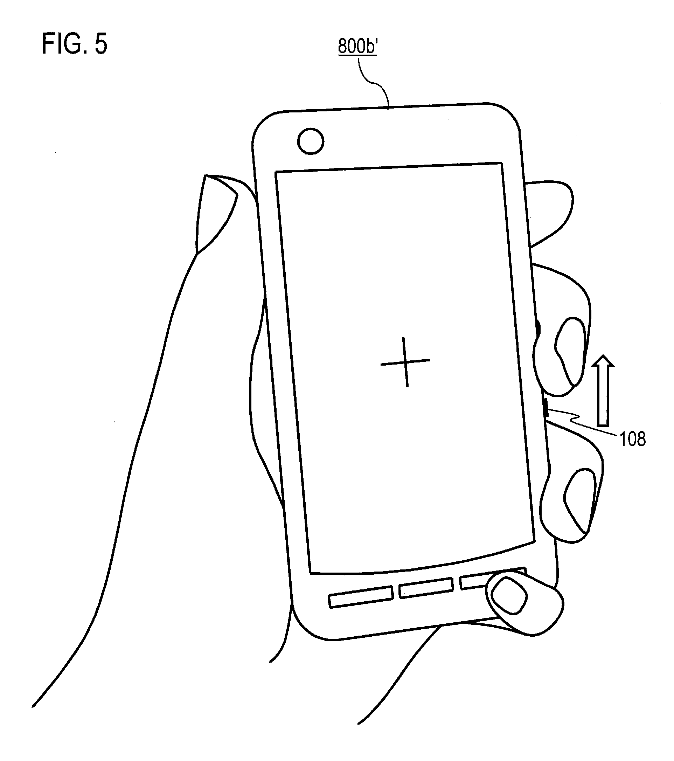

Example cases in which gripping features change before and after the portable terminal is changed include cases in which the shape of the portable terminal is changed or the positions of the operating keys are changed before and after the portable terminal is changed, so that the gripping features change. A case in which gripping features change as the arrangement of the operating keys is changed before and after the portable terminal is changed will be described specifically with reference to Figs. 3 and 5. Fig. 5 is a view showing a state in which the portable terminal 800b' is gripped. In the present description, it is assumed that the portable terminal is changed from the portable terminal 800a to the portable terminal 800b'; and the portable terminal 800b', used after the portable terminal is changed, has exactly the same sensor positions as the portable terminal 800a, used before the portable terminal is changed, but is provided, at the right side face thereof, with an operating key (such as a camera activation button) 108, which is not provided on the portable terminal 800a. In that case, the user grips the portable terminal 800b' with his or her fingers shifted a little (see an arrow in Fig. 5) so as not to place the fingers on the operating key 108 to prevent it from being erroneously pressed in a usual gripping state, as shown in Fig. 5. As understood when comparing Fig. 3 with Fig. 5, the user shifts his or her middle finger a little toward the index finger to avoid pressing the operating key 108 at the right side face of the portable terminal 800b'.

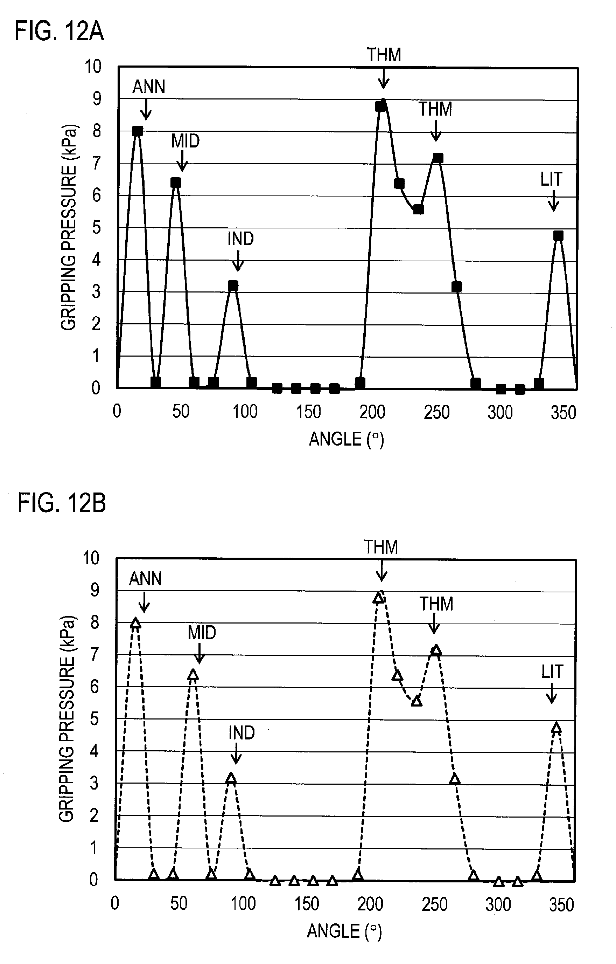

Changes in measured values of a gripping pressure distribution caused by changes in the gripping state before and after the portable terminal is changed will be described here with reference to Figs. 12A and 12B. Fig. 12A is a view of an authentication template before the portable terminal is changed in a case where the gripping state is different before and after the portable terminal is changed, and Fig. 12B is an example view of a gripping feature sample acquired after the portable terminal is changed. In other words, Fig. 12A shows the former template, and Fig. 12B shows measured values in the gripping pressure distribution when the user grips the portable terminal 800b'. In the graphs, the vertical axis indicates gripping pressure (kPa), and the horizontal axis indicates the angle (°) defined with the reference point being used as the vertex, as described earlier. The positions corresponding to the thumb, the index finger, the middle finger, the ring finger, and the little finger are roughly indicated by arrows labeled THM, IND, MID, ANN, and LIT in the graphs. The values acquired at the pressure sensors in the former template are indicated by black squares in Fig. 12A, and the measured gripping pressure values at the pressure sensors acquired when the portable terminal 800b' is gripped are indicated by white triangles in Fig. 12B. Curves obtained by smooth-fitting the measured values are indicated by a solid line in Fig. 12A and by a dotted line in Fig. 12B. Since the portable terminals 800a and 800b' have exactly the same sensor positions as described earlier, the points indicated by the black squares and the points indicated by the white triangles have identical values (angles) along the horizontal axis. As shown in Figs. 3 and 5, in terms of the gripping features of the user, the middle finger is shifted toward the index finger, and the other fingers are almost the same. Therefore, in Fig. 12B, it is understood that the peak gripping-pressure position caused by pressing with the middle finger (MID) is shifted in the positive angle direction from the position of the middle finger shown in Fig. 12A. Correcting such a change in gripping features caused by a change in the gripping state before and after the portable terminal is changed will be described below.

Extracting feature segments and correcting segment positions

To correct a change in gripping features caused by a change in the gripping state before and after the portable terminal is changed, it is possible to calculate the distance between the former template and a gripping feature sample acquired newly and to estimate a new authentication template from this distance with a statistical method. One specific example method for implementing a new authentication template will be described.

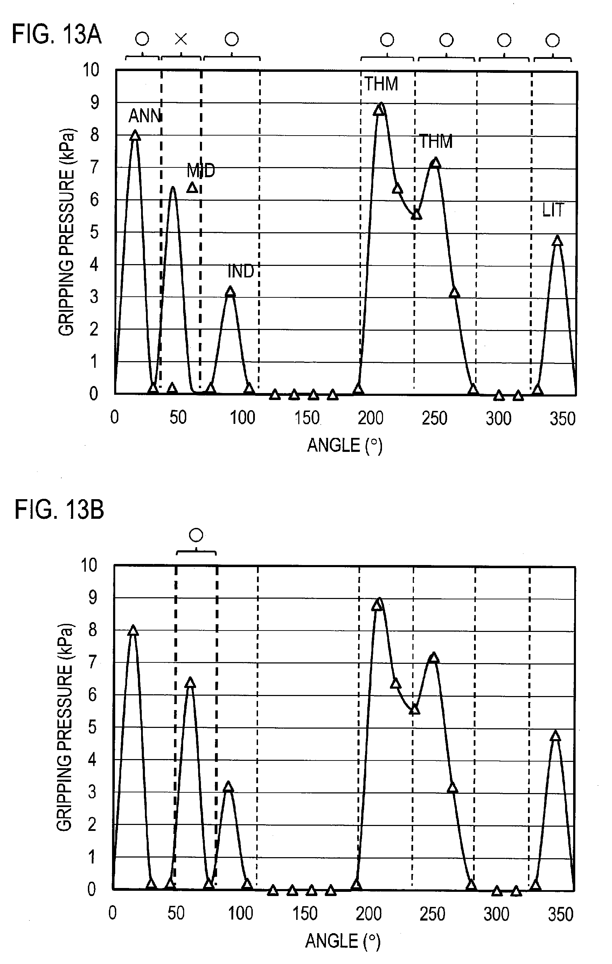

The portable terminals 800 and 800' according to all of the embodiments of the present invention, the functional blocks of the portable terminals 800 and 800' being shown in Fig. 14 and Fig. 15, include a feature-segment extracting section 830 and a segment-position correcting section 835. The other sections constituting the portable terminals 800 and 800' will be described later in detail. The feature-segment extracting section 830 extracts feature segments from the former template, and the segment-position correcting section 835 applies deformation correction, described later, to correct the former template. Fig. 13A is a view explaining feature-segment extraction performed by the feature-segment extracting section 830, and Fig. 13B is a view explaining deformation correction performed by the segment-position correcting section 835. In Fig. 13A, a curve obtained by smooth-fitting the values corresponding to the pressure-sensor angle positions in the former template, with, for example, a trigonometric function or another desired function, is indicated by a solid line, and the measured gripping-pressure values acquired in the portable terminal 800', used after the portable terminal is changed, are schematically indicated by white triangles. The curve obtained by fitting can be acquired as digital gripping feature values corresponding to a series of discrete angle positions (digital values) that includes the sensor positions and positions between the sensors.

First, feature segments are extracted in the former template. A well-known edge detection method or other methods can be used to extract feature segments. For example, feature segments can be obtained by extracting zero points having positive gradients in the first derivative of the curve and by dividing the template at the zero points. When the k-th angle position in K discrete angle positions in the range from 0 to 360 degrees is indicated by $\theta_k$, the first derivative (gradient) of the curve can be calculated by dividing the difference between a gripping pressure value $X_k$ at the angle position $\theta_k$ and a gripping pressure value $X_{k-1}$ at the angle position $\theta_{k-1}$ by the difference between the angle positions, that is, $(X_k - X_{k-1})/(\theta_k - \theta_{k-1})$. With this method, for example, an area around 0 to 30 degrees, corresponding to the position where the ring finger presses, is partitioned as a segment by a dotted line so as to include the start point, the peak position, and the end point of the range where the ring finger presses, as shown in Fig. 13A. Feature segments are also partitioned for the middle finger, the index finger, and other fingers.

Next, the distances between the former template and measured gripping-pressure values acquired in the portable terminal 800b', used after the portable terminal is changed, are measured in each feature segment extracted as described above. These distances may be an inter-vector distance between the gripping pressure values at the respective sensor angle positions in each feature segment in the former template and the respective measured gripping-pressure values in the same feature segment, acquired in the portable terminal 800b', used after the portable terminal is changed. The inter-vector distance may be, for example, expressed similarly to Expression (4), (5), or (6), described earlier. It is assumed here that the upper-boundary angle position in each feature segment belongs to the feature segment; and, when the absolute value of the difference between the template value and the measured gripping pressure value at the central angle position between both ends of the segment is equal to or larger than a predetermined value, the angle positions at both ends also belong to the segment. Whether the gripping features have changed can be determined from whether the distance in each feature segment, calculated as described above, exceeds a predetermined threshold. For example, in Fig. 13A, since the position of the middle finger is changed before and after the portable terminal 800a is changed, in an area around 30 to 60 degrees corresponding to the position where the middle finger presses the portable terminal 800a, used before the portable terminal is changed, the white triangle points (the measured gripping-pressure values acquired in the portable terminal 800b, used after the portable terminal is changed) are not on the solid line (on the former template). Therefore, the distance in the feature segment corresponding to the position where the middle finger presses is larger than the distances in the other feature segments. In Fig. 13A, mark x indicates that the above-described distance exceeds the predetermined threshold in that feature segment, whereas mark ○ indicates that the above-described distance does not exceed the predetermined threshold in that feature segment. The following deformation correction is applied to the former template in the feature segment marked with x.

Deformation correction is performed by shifting the former template along the horizontal axis in a feature segment where the distance exceeds the threshold, as the feature segment of the area around 30 to 60 degrees in Fig. 13A, for example. More specifically, every time the template in a feature segment in which the distance exceeds the threshold is shifted by one sensor angle in the direction in which the angle position increases or decreases, the inter-vector distance between the template at the shifted segment position and the gripping pressure values in the measured sample is calculated, and the template in that segment is shifted to the angle position where the distance becomes minimum. As described earlier, the curve obtained by smooth-fitting the values in the former template is used to divide the template into the segments. Instead of this fitting curve, a broken line connecting the values in the former template by straight lines may be used to divide the template into segments. As described above, the difference in gripping features before and after the portable terminal is changed is obtained in each feature segment, and when the difference exceeds the threshold, deformation correction in which the former template is shifted in the feature segment is applied. Even if the gripping features are deformed partially, the deformation can be effectively corrected to reuse the former template.

As a specific example of deformation correction, the operations of the feature-segment extracting section 830 and the segment-position correcting section 835 have been described. The feature-segment extracting section 830 needs to calculate the distance between the former template and the data of a newly acquired gripping feature sample, and the segment-position correcting section 835 needs to apply deformation correction to the former template according to the distance calculated by the feature-segment extracting section 830, to obtain a new authentication template. The present invention is not limited to the specific example of deformation correction described above.

Changes in position of pressure sensors before and after the portable terminal is changed

A case in which the positions of the pressure sensors change before and after the portable terminal is changed will be described in detail with reference to Fig. 1 again and to Fig. 2 newly. Fig. 2 is a view showing the portable terminal 800b, which has pressure sensor arrays. In the present description, it is assumed that the user first uses the portable terminal 800a, the authentication template has been learned by a learning function of the portable terminal 800a, and then, the user changes from the portable terminal 800a to the portable terminal 800b. As described earlier, the portable terminal 800b is a smart phone, like the portable terminal 800a.

As is clear when the portable terminal 800a shown in Fig. 1 is compared with the portable terminal 800b shown in Fig. 2, the portable terminal 800a is provided with the pressure sensor array Ra having the seven pressure sensors 105a-1 to 105a-7 at the right side face, whereas the portable terminal 800b is provided with the pressure sensor array Rb having the five pressure sensors 105a-1 to 105b-5 at the right side face. The number of pressure sensors at the right side face is smaller in the portable terminal 800b than in the portable terminal 800a. The portable terminal 800a is provided with the pressure sensor array Ua having the four pressure sensors 105a-8 to 105a-11 at the upper face, whereas the portable terminal 800b is provided with the pressure sensor array Ub having the three pressure sensors 105b-6 to 105b-8 at the upper face. The number of pressure sensors at the upper face is smaller in the portable terminal 800b than in the portable terminal 800a. As in this example, even if each portable terminal has pressure sensors from which gripping features can be acquired, the positions and the number of pressure sensors cannot be made equal among all models due to the structural design. In addition, since the sizes of portable terminals differ depending on the design, the positions and the number of pressure sensors change accordingly.

In the present description, the number of sensors is reduced after the portable terminal is changed, and the positions of the sensors change accordingly. However, in another conceivable case, although the total number of sensors is not changed before and after the portable terminal is changed, the positions of the sensors differ before and after the portable terminal is changed. As described earlier, it is assumed here that the user changes from the portable terminal 800a, which is a smart phone, to the portable terminal 800b. Figs. 3 and 4 show example states in which the portable terminal 800a, which is used before the change of the portable terminal, and the portable terminal 800b, which is used after the change of the portable terminal, are gripped by the user who first uses the portable terminal 800a. In the present description, it is assumed that, because the portable terminal 800a and the portable terminal 800b are similar in shape, the way the user grips the portable terminal changes little before and after the portable terminal is changed, and only the arrangement of pressure sensors has a large effect on the acquired measurement values of the gripping pressure distribution.

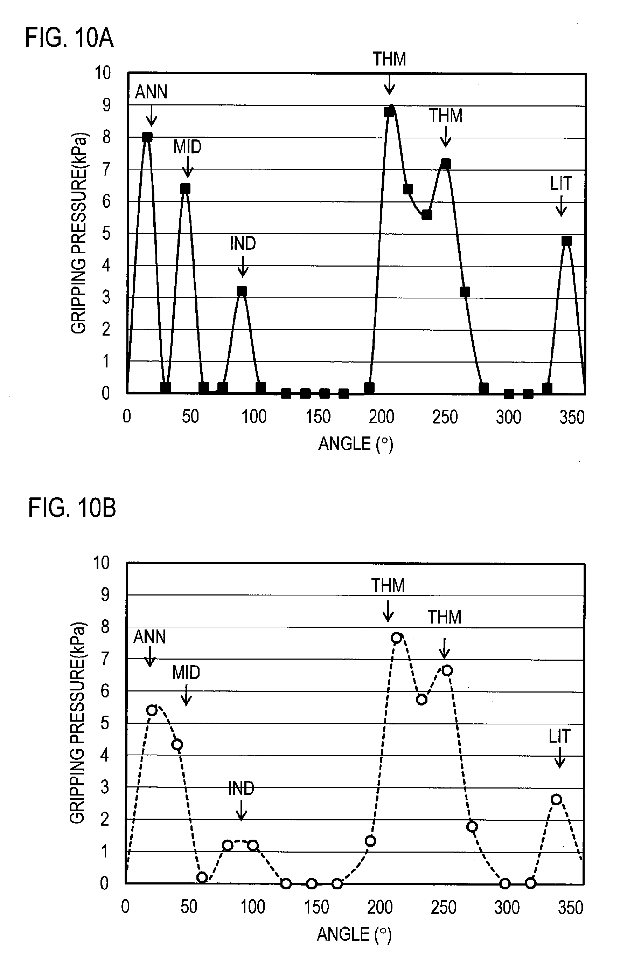

Changes in measurement values of the gripping pressure distribution caused by different sensor positions before and after the portable terminal is changed will be described below with reference to Figs. 10A and 10B. Fig. 10A shows an authentication template used before the portable terminal is changed in a case in which sensor positions differ before and after the portable terminal is changed. Fig. 10B shows an example gripping feature sample after the portable terminal is changed. Fig. 10A shows the authentication template (hereafter called a former template) learned in the portable terminal 800a, used before the portable terminal is changed. Fig. 10B shows a gripping pressure distribution (gripping feature sample) obtained when the portable terminal 800b, used after the portable terminal is changed, is gripped. In the graphs, the vertical axis indicates gripping pressure (kPa), and the horizontal axis indicates the angle (°) defined with the reference point being used as the vertex, as described earlier. The positions corresponding to the thumb, the index finger, the middle finger, the ring finger, and the little finger are roughly indicated by arrows labeled THM, IND, MID, ANN, and LIT in the graphs. The values acquired at the pressure sensors in the former template are indicated by black squares, and the measured gripping pressure values at the pressure sensors acquired when the portable terminal 800b is gripped are indicated by white circles. Curves obtained by smooth-fitting the measured values are indicated by a solid line in Fig. 10A and by a dotted line in Fig. 10B.

The gripping features of the user change little before and after the portable terminal is changed, as shown in Figs. 3 and 4. The reason why the graphs shown in Figs. 10A and 10B differ even though the way the user grips the portable terminal changes little before and after the portable terminal is changed is that whether a sensor is located at an area where a finger presses the portable terminal with high pressure is changed due to the changes in sensor positions. For example, the index finger presses the terminal at around 90 degrees. As is clear from the graph shown in Fig. 10A, since the portable terminal 800a has the pressure sensor 105b-6 at the position where the index finger presses, the peak pressure value can be measured. In contrast, as is clear from the graph shown in Fig. 10B, since the portable terminal 800b, used after the portable terminal is changed, has the pressure sensors 105b-4 and 105b-5, between which the position where the index finger presses the terminal, about 90 degrees, is located, the peak pressure value of the index finger cannot be detected with the pressure sensors 105b-4 and 105b-5. As described above, when the positions of the pressure sensors differ before and after the portable terminal is changed, the acquired gripping pressure distribution is different. However, this difference merely means that similar gripping pressure distributions of the same user are measured at different positions.

The differences in sensor positions between the portable terminals 800a and 800b, both being smart phones, have been described. Differences in sensor positions occur between not only smart phones but also conventional portable terminals. These differences will be described with reference to Figs. 6 and 7. Fig. 6 is a view showing the portable terminal 800c having pressure sensor arrays. Fig. 7 is a view showing the portable terminal 800d having pressure sensor arrays. As described earlier, the portable terminal 800c is not a smart phone but an older-generation folding-type portable terminal. The portable terminal 800d is not a smart phone but an older-generation sliding-type portable terminal. As shown in Figs. 6 and 7, the position of the seventh pressure sensor of the portable terminal 800c is $\theta c_7$, the position of the seventh pressure sensor of the portable terminal 800d is $\theta d_7$, and $\theta c_7$ is larger than $\theta d_7$. When the portable terminal 800c is changed to the portable terminal 800d, the gripping features do not change much in appearance if compared with the center of the OK key (the point indicated by the cross) being used as a reference, as shown in Figs. 8 and 9. Therefore, also in this case, when the positions of the pressure sensors differ before and after the portable terminal is changed, the acquired gripping pressure distribution is different. However, this difference merely means that similar gripping pressure distributions of the same user are measured at different positions.

Correcting sensor positions

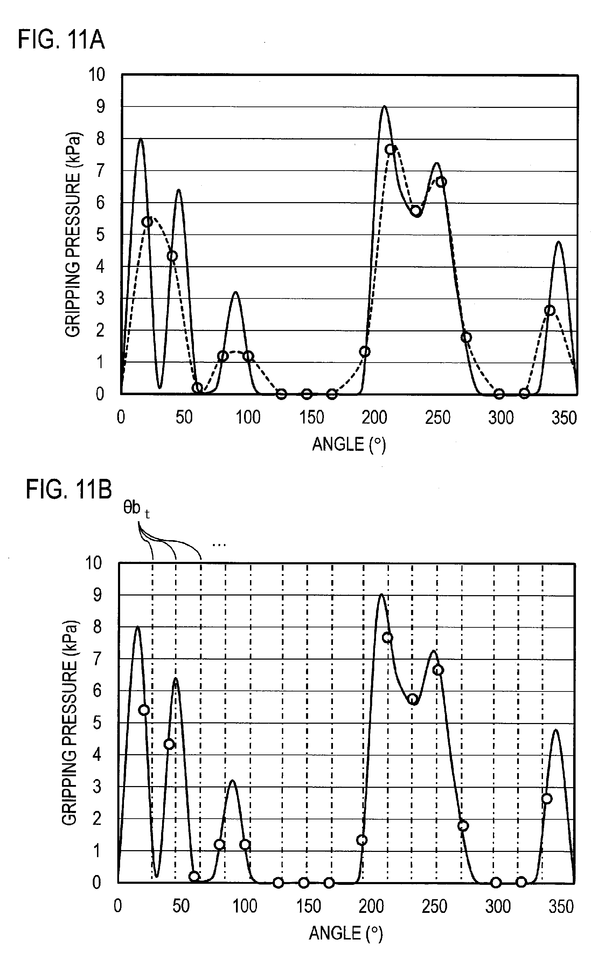

Correcting changes in gripping features caused by changes in pressure sensor positions before and after the portable terminal is changed, described above, will be described below. The portable terminal 800' according to a second embodiment of the present invention, the functional block thereof being shown in Fig. 15, is provided with a sensor position storage 810 and a sensor position correcting section 815. The other sections constituting the portable terminal 800' will be described later in detail. The sensor position correcting section 815 performs interpolation to correct changes in gripping features caused by changes in pressure sensor positions. This correction will be described in detail with reference to Figs. 11A and 11B. Fig. 11A shows the graph shown in Fig. 10A placed on the graph shown in Fig. 10B. The graph shown in Fig. 10A is indicated by a solid line, which shows a former template learned with the portable terminal 800a, used before the portable terminal is changed, and the graph shown in Fig. 10B is indicated by a dotted line, which shows the gripping pressure distribution (gripping feature sample) acquired by the portable terminal 800b, used after the portable terminal is changed. In the same way as in Fig. 10B, the measured values of gripping pressure with the pressure sensors in the portable terminal 800b, used after the portable terminal is changed, are indicated by white circles. As shown in Fig. 11A, when the gripping features of the user do not change before and after the portable terminal is changed, the measured values (white circles) of the pressure sensor arrays in the portable terminal 800b should ideally be close to or on the fitting curve of the former template obtained before the portable terminal is changed. Therefore, as shown in Fig. 11B, gripping pressure values at the sensor angle positions $\theta b_t$ (indicated by a short-and-long-dot chain line) of the portable terminal 800b, used after the portable terminal is changed, can be extracted as interpolation values from the fitting curve of the former template already obtained before the portable terminal is changed, and used as prediction values (indicated by white circles in Fig. 11B) at the new sensor positions in an authentication template. The authentication template to be used after the portable terminal is changed includes these predicted measurement values (white circles in Fig. 11B). To perform such a process, it is necessary to store the sensor positions $\theta b_t$ of the portable terminal 800b, used after the portable terminal is changed, in the sensor-position storage 810 in the portable terminal 800' according to the second embodiment of the present invention. The sensor positions are not limited to those indicated by angles, as described above, but it is preferable that the center of the touch sensitive panel (OK key) be used as the reference point. This is because the gripping features of the user are stable before and after the portable terminal is changed unless the portable terminal changes much in size.
As described above, since the former template can be converted to the authentication template for the portable terminal 800b, used after the portable terminal is changed, by applying interpolation at the sensor positions, the former template can be reused. This method can be used for cases in which the number of pressure sensors in the portable terminal, used before the portable terminal is changed, is equal to or smaller than that in the portable terminal, used after the portable terminal is changed, but the method is not suitable for the converse cases because the estimation error would become large. If a past authentication template cannot be reused well, a usual authentication template learning method, described later, can be used instead to obtain a highly precise authentication template.

Case in which both the gripping state and pressure sensor positions are changed before and after the portable terminal is changed

Even when the gripping state and the pressure sensor positions are both changed before and after the portable terminal is changed, the former template can be corrected. In that case, feature-segment extraction and deformation correction (segment-position correction) are first applied to the former template. Then, the former template obtained after deformation correction and a gripping feature sample acquired after the portable terminal is changed are compared, and the inter-vector distance is calculated. When the inter-vector distance exceeds a predetermined threshold, interpolation is applied to the former template obtained after deformation correction, according to the sensor positions stored in the sensor position storage. As described above, even when the gripping state and the pressure sensor positions are both changed before and after the portable terminal is changed, the former template can be corrected to be reused in the portable terminal, used after the portable terminal is changed.

[First Embodiment]

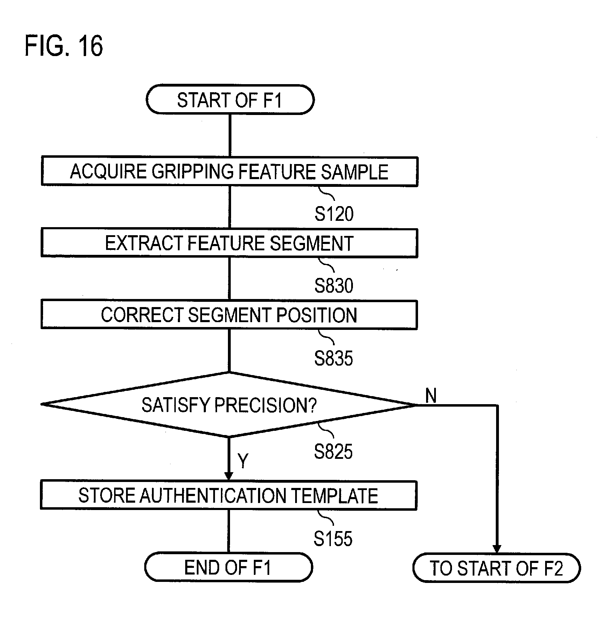

With the above described conditions being used as a premise, the portable terminal 800 according to a first embodiment will be described in detail. Reusing the former template in a learning state in the portable terminal 800 will be described first with reference to Fig. 14 and Fig. 16. Fig. 14 is a block diagram showing the configuration of the portable terminal 800. Fig. 16 is a flowchart (F1) showing how to reuse the former template in the portable terminal 800.

The portable terminal 800 includes a pressure sensor array 105, a gripping-feature sample acquisition section 120, a switch 125, a temporary sample storage 130, a former-template storage 805, the feature-segment extracting section 830, the segment-position correcting section 835, a template comparison section 820, a template storage 155, a template learning section 135, an authentication section 160, and a locking section 180. The switch 125 can switch the portable terminal 800 between the learning state and an authentication state. It is assumed here that the switch 125 is set to the learning state (connected to the temporary sample storage 130).

The gripping-feature sample acquisition section 120 acquires a gripping feature sample from the pressure sensor array 105 (S120). The temporary sample storage 130 temporarily stores the gripping feature sample acquired by the gripping-feature sample acquisition section 120. The former-template storage 805 stores the authentication template used for authentication in a portable terminal used in the past, as a former template. The feature-segment extracting section 830 extracts feature segments from the former template, compares the former template with the gripping feature sample in each of the feature segments, and calculates the distance (S830) (for details, see Extracting feature segments and correcting segment positions). The segment-position correcting section 835 applies deformation correction to the former template by shifting the former template in the feature segments where the distance calculated by the feature-segment extracting section 830 is longer than a predetermined value, to generate a corrected template (S835) (for details, see Extracting feature segments and correcting segment positions). The template comparison section 820 compares the corrected template generated in step S835 with the acquired gripping feature sample and calculates the inter-vector distance (S825). The template storage 155 stores the corrected template as an authentication template (S 155) when the inter-vector distance between the corrected template and the acquired gripping feature sample is equal to or shorter than a predetermined value (Yes in S825). The inter-vector distance used here can be Mahalanobis's generalized distance, which is frequently used for biometric authentication, or the like. In contrast, when the inter-vector distance between the corrected template and the acquired gripping feature sample is longer than the predetermined value (No in S825), it is determined that the former template cannot be reused and the processing proceeds to a flowchart F2 (to the start of F2) showing a usual authentication-template learning method.

It is also possible that the deformation correction data (such as the position of a feature segment in which deformation correction is required, and the shift direction and the amount of shift of the feature segment) of the portable terminal 800 of the present embodiment is stored in a server; and, if the gripping features change when another user changes the portable terminal, the portable terminal 800 owned by this other user, used after the portable terminal is changed, accesses the server, acquires necessary deformation correction data, and applies deformation correction to the former template according to the acquired deformation correction data.

As described above, since the portable terminal 800 of the present embodiment applies deformation correction to the former template in each feature segment, even if the gripping features change before and after the portable terminal is changed, the former template can be reused. In this case, it is not necessary to learn an authentication template every time the portable terminal is changed, increasing the convenience of the user.

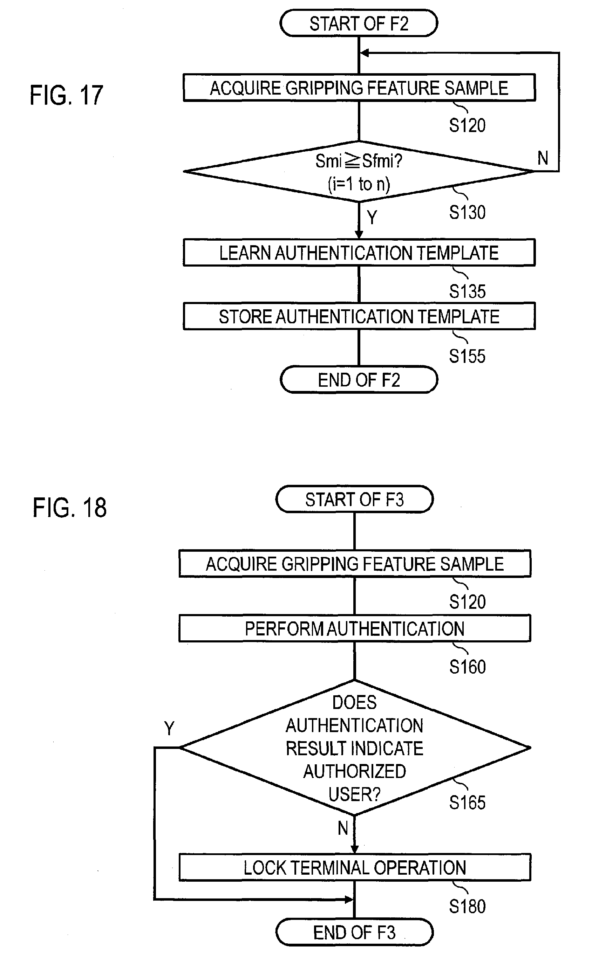

Next, with continuing reference to Fig. 14 and to Fig. 17 newly, an authentication-template learning operation in the learning state in the portable terminal 800 according to the present embodiment will be described. Fig. 17 is a flowchart (F2) showing the authentication-template learning operation of the portable terminal 800 according to the present embodiment. As described earlier, when the inter-vector distance between the corrected template and the acquired gripping feature sample is longer than the predetermined value (No in S825), the processing proceeds to the flowchart F2, and the usual authentication-template learning operation is performed. It is assumed here in the same way as described earlier that the switch 125 is set to the learning state (connected to the temporary sample storage 130). First, the gripping-feature sample acquisition section 120 acquires a gripping feature sample from the pressure sensor array 105 (S120). It is assumed here that the number of gripping feature samples already acquired is Sm, and the number of learning-start samples is SFm. The number of learning-start samples, SFm, means a predetermined number of samples required for learning the authentication template. Since it is highly possible that, even if the authentication template is learned with a small number of acquired gripping feature samples, the authentication template cannot be generated with sufficient precision, the number of samples empirically found to be required to obtain a highly precise authentication template is set in the number of learning-start samples, SFm. Consequently, when the number of gripping feature samples, Sm, stored in the temporary sample storage 130 reaches the number of learning-start samples, SFm, that is, $Sm \geq SFm$, the processing proceeds to step S135, and the template learning section 135 learns the authentication template with the gripping feature samples (Yes in S130 and S 13 5) and stores the learned authentication template in the template storage 155 (S155). If the number of gripping feature samples, Sm, stored in the temporary sample storage 130 does not reach the number of learning-start samples, SFm, that is, Sm < SFm (No in S 130), the processing returns to the start (S130), and the process for acquiring a gripping feature sample is repeated (S 120). The authentication template is obtained from the average of gripping feature samples (gripping pressure distributions in the present embodiment) by calculating Expressions (1), (2), and (3), described earlier. As described above, in the portable terminal 800 of the present embodiment, even if the former template cannot be reused to obtain an authentication template having sufficient precision, an authentication template reflecting the gripping features in the portable terminal, used after the portable terminal is changed, can be learned with the usual authentication-template learning method.

Next, with continuing reference to Fig. 14 and to Fig. 18 newly, authentication of the portable terminal 800 of the present embodiment in the authentication state will be described. Fig. 18 is a flowchart (F3) showing authentication of the portable terminal 800. It is assumed here that the switch 125 is set to the authentication state (connected to the authentication section 160). It is also assumed that template learning, described above, has already been finished before authentication. The gripping-feature sample acquisition section 120 acquires a gripping feature sample from the pressure sensor array 105 (S120). Next, the authentication section 160 compares the learned (reused) authentication template with the gripping feature sample to perform authentication (S 160). If this authentication fails (No in S 165), the locking section 180 locks some or all of the functions of the portable terminal 800 (S180). If the authentication is successful (Yes in S165), the locking operation is not performed (end of processing). The authentication template and the gripping feature sample can be compared in the following way, for example. The authentication section 160 calculates an inter-vector distance between the authentication template and the gripping feature sample acquired in the authentication state, for example, the distance given by Expression (4), (5), or (6), described earlier. The authentication section 160 determines that the acquired gripping feature sample was acquired from the authentication target when the distance is equal to or shorter than a predetermined value, as given by Inequality (7), described earlier. The authentication section 160 determines that the acquired gripping feature sample was not acquired from the authentication target when the distance between the authentication template and the gripping feature sample is longer than the predetermined value.

[Second Embodiment]

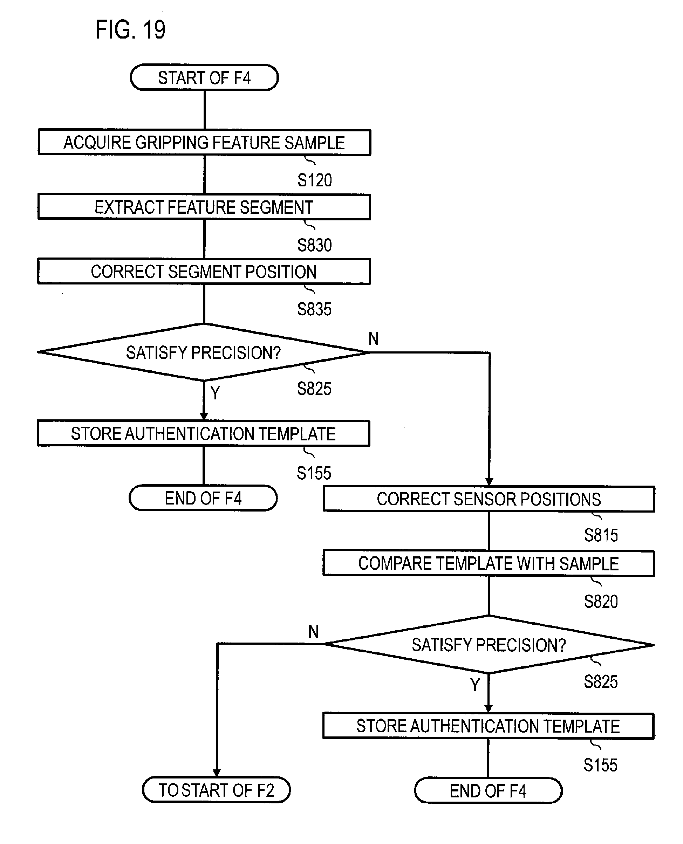

Next, the portable terminal 800' according to the second embodiment, in which the authentication-template reusing function of the portable terminal according to the first embodiment has been further enhanced, will be described in detail. The former-template reusing operation of the portable terminal 800' according to the present embodiment, in a learning state, will be described with reference to Fig. 15 and Fig. 19. Fig. 15 is a block diagram showing the configuration of the portable terminal 800'. Fig. 19 is a flowchart (F4) showing the former-template reusing operation of the portable terminal 800'. The portable terminal 800' is made by adding the sensor position storage 810 and the sensor position correcting section 815 to the configuration of the portable terminal 800 shown in Fig. 14. Since the operation of each section other than the sensor position storage 810 and the sensor position correcting section 815 is exactly the same as that of the section having the same reference numeral in the first embodiment, a description thereof is omitted. It is also assumed, as in the first embodiment, that the switch 125 can switch the portable terminal 800' between the learning state and an authentication state. It is assumed here that the switch 125 is set to the learning state. Since steps S120, S830, S835, S825, and S155 in the flowchart F4 are the same as steps S120, S830, S835, S825, and S155 in the flowchart F1, described earlier, a description thereof is omitted.

The difference from the first embodiment is the processes performed when a No determination is made in step S825. The sensor position storage 810 stores sensor positions in the portable terminal currently being used. When the inter-vector distance between the corrected template and the acquired gripping feature sample is longer than the predetermined value (No in S825), the sensor position correcting section 815 obtains the corrected template and the sensor positions, applies interpolation to the corrected template according to the sensor positions, and generates an interpolated template (S815) (for details, see Correcting sensor positions). The template comparison section 820 compares the interpolated template generated in step S815 with the gripping feature sample and calculates the inter-vector distance therebetween (S820). When the inter-vector distance between the interpolated template and the gripping feature sample is equal to or shorter than the predetermined value (Yes in S825), the template storage 155 stores the interpolated template as an authentication template (S155). In contrast, when the inter-vector distance between the interpolated template and the acquired gripping feature sample is longer than the predetermined value (No in S825), it is determined that the former template cannot be reused and the processing proceeds to the flowchart F2 (to the start of F2), which shows the usual authentication-template learning method. The authentication-template learning operation (flowchart F2) of the portable terminal 800' of the present embodiment, in the learning state, and the authentication operation (flowchart F3) of the portable terminal 800', in the authentication state, are the same as in the first embodiment, and therefore a description thereof is omitted. As described above, since the portable terminal 800' of the present embodiment applies interpolation to the former template by using the sensor positions, even if the sensor positions change before and after the portable terminal is changed, the former template can be reused. In this case, it is not necessary to learn an authentication template every time the portable terminal is changed, increasing the convenience of the user.

Each type of processing described above may be executed not only time-sequentially according to the order in the description but also in parallel or individually when necessary or according to the processing capability of each apparatus that executes the processing. Appropriate changes can be made to the above embodiments without departing from the scope of the present invention.

When the configurations described above are implemented by a computer, the processing details of the functions that should be provided by each apparatus are described in a program. When the program is executed by the computer, the processing functions are implemented on the computer.

The program containing the processing details can be recorded in a computer-readable recording medium. The computer-readable recording medium can be any type of medium, such as a magnetic recording device, an optical disc, a magneto-optical recording medium, or a semiconductor memory.

The program is distributed by selling, transferring, or lending a portable recording medium, such as a DVD or a CD-ROM, with the program recorded on it, for example. The program may also be distributed by storing the program in a storage unit of a server computer and transferring the program from the server computer to another computer through a network.

A computer that executes this type of program first stores the program recorded on a portable recording medium or the program transferred from the server computer in its storage unit. Then, the computer reads the program stored in its storage unit and executes processing in accordance with the read program. In a different program execution form, the computer may read the program directly from the portable recording medium and execute processing in accordance with the program, or the computer may execute processing in accordance with the program each time the computer receives the program transferred from the server computer. Alternatively, the above-described processing may be executed by a so-called application service provider (ASP) service, in which the processing functions are implemented just by giving program execution instructions and obtaining the results without transferring the program from the server computer to the computer. The program of this form includes information that is provided for use in processing by the computer and is treated equivalent to a program (something that is not a direct instruction to the computer but is data or the like that has characteristics that determine the processing executed by the computer).

In the description given above, each apparatus is implemented by executing the predetermined program on the computer, but at least a part of the processing details may be implemented by hardware.

**Claims**

1. A portable terminal having functions of acquiring a gripping feature sample from a sensor array formed of a plurality of sensors and of performing authentication by using an authentication template, the portable terminal comprising:

   a gripping-feature sample acquisition section adapted to acquire the gripping feature sample from the sensor array;
   a former-template storage adapted to store an old authentication template used for authentication in a portable terminal used in the past, as a former template;
   a feature-segment extracting section adapted to extract a feature segment from the former template, to compare the former template with the gripping feature sample in each feature segment, and to calculate a distance therebetween;
   a segment-position correcting section adapted to apply deformation correction to the former template in a feature segment in which the distance calculated by the feature-segment extracting section is longer than a predetermined value, to generate a corrected template;
   a template comparison section adapted to compare the corrected template with the acquired gripping feature sample and to calculate an inter-vector distance therebetween; and
   a template storage adapted to store the corrected template as the authentication template when the inter-vector distance between the corrected template and the acquired gripping feature sample is equal to or shorter than a predetermined value.

2. The portable terminal according to Claim 1, further comprising:

   a temporary sample storage adapted to store a predetermined number of gripping feature samples when the inter-vector distance between the corrected template and the acquired gripping feature sample is longer than the predetermined value; and
   a template learning section adapted, when the temporary sample storage stores the predetermined number of gripping feature samples, to learn the authentication template by using the gripping feature samples and to store the authentication template in the template storage.

3. The portable terminal according to Claim 1, further comprising:

   a sensor-position storage adapted to store the positions of the sensors in the portable terminal currently being used; and
   a sensor-position correcting section adapted to acquire the corrected template and the positions of the sensors and to apply interpolation to the corrected template according to the positions of the sensors to generate an interpolated template, when the inter-vector distance between the corrected template and the acquired gripping feature sample is longer than the predetermined value;

wherein the template comparison section is configured to compare the interpolated template with the gripping feature sample and to calculate an inter-vector distance therebetween; and

the template storage is configured to store the interpolated template as the authentication template when the inter-vector distance between the interpolated template and the gripping feature sample is equal to or shorter than a predetermined value.

4. The portable terminal according to Claim 3, further comprising:

a temporary sample storage adapted to store a predetermined number of gripping feature samples when the inter-vector distance between the interpolated template and the gripping feature sample is longer than the predetermined value; and

a template learning section adapted, when the temporary sample storage stores the predetermined number of gripping feature samples, to learn the authentication template by using the gripping feature samples and to store the authentication template in the template storage.

5. A gripping-feature learning method for acquiring a gripping feature sample from a sensor array formed of a plurality of sensors and for learning an authentication template used for authentication, the gripping-feature learning method comprising:

a gripping-feature sample acquisition step of acquiring the gripping feature sample from the sensor array;

a former-template storage step of storing an old authentication template used for authentication in a portable terminal used in the past, as a former template;

a feature-segment extracting step of extracting a feature segment from the former template, comparing the former template with the gripping feature sample in each feature segment, and calculating a distance therebetween;

a segment-position correcting step of applying deformation correction to the former template in a feature segment in which the distance calculated in the feature-segment extracting step is longer than a predetermined value, to generate a corrected template;

a template comparison step of comparing the corrected template with the acquired gripping feature sample and calculating an inter-vector distance therebetween; and

a template storage step of storing the corrected template as the authentication template when the inter-vector distance between the corrected template and the acquired gripping feature sample is equal to or shorter than a predetermined value.

6. The gripping-feature learning method according to Claim 5, further comprising:

a temporary sample storage step of storing a predetermined number of gripping feature samples when the inter-vector distance between the corrected template and the acquired gripping feature sample is longer than the predetermined value; and

a template learning step of, when the predetermined number of gripping feature samples are stored in the temporary sample storage step, learning the authentication template by using the gripping feature samples and storing the authentication template.

7. The gripping-feature learning method according to Claim 5, further comprising:

a sensor-position storage step of storing the positions of the sensors in the portable terminal currently being used; and

a sensor-position correcting step of acquiring the corrected template and the positions of the sensors and applying interpolation to the corrected template according to the positions of the sensors to generate an interpolated template, when the inter-vector distance between the corrected template and the acquired gripping feature sample is longer than the predetermined value;

wherein the interpolated template is compared with the gripping feature sample and an inter-vector distance therebetween is calculated in the template comparison step; and

when the inter-vector distance between the interpolated template and the gripping feature sample is equal to or shorter than a predetermined value, the interpolated template is stored as the authentication template in the template storage step.

8. The gripping-feature learning method according to Claim 7, further comprising:

a temporary sample storage step of storing a predetermined number of gripping feature samples when the inter-vector distance between the interpolated template and the gripping feature sample is longer than the predetermined value; and
a template learning step of, when the predetermined number of gripping feature samples are stored in the temporary sample storage step, learning the authentication template by using the gripping feature samples and storing the authentication template.

9. A recording medium having recorded thereon a program for causing a computer to execute the gripping-feature learning method according to one of Claims 5 to 8.

# FIG. 1

Ua

105a-11    105a-10    105a-9    105a-8

102                                              101

105a-12                                         105a-7

105a-13                                         105a-6

105a-14                                         105a-5

La    105a-15              OX    $\theta a_5$              105a-4    Ra

105a-16                                         105a-3

105a-17                                         105a-2

105a-18                                         105a-1

800a

103

105a-19    105a-20    105a-21    105a-22

0°

Ba

## FIG. 2

FIG. 3

FIG. 4

800b

FIG. 5

<u>800b'</u>

108

FIG. 6

800c

101B

102

103c

105c-10    101A

105c-9

OX    θc₇

Lc    107    Rc

105c-18    105c-1

105c-19 · · · · 105c-23

Bc    0°

FIG. 7

FIG. 8

800c

FIG. 9

800d

FIG. 10A

FIG. 10B

FIG. 11A

FIG. 11B

FIG. 12A

FIG. 12B

FIG. 13A

FIG. 13B

FIG. 14

800 PORTABLE TERMINAL

FIG. 15

800' PORTABLE TERMINAL

FIG. 16

```
        ┌──────────────────────┐
        │     START OF F1       │
        └──────────┬───────────┘
                   │
   ┌───────────────┴─────────────────┐
   │  ACQUIRE GRIPPING FEATURE SAMPLE │
   └───────────────┬─────────────────┘
                   │  S120
   ┌───────────────┴─────────────────┐
   │      EXTRACT FEATURE SEGMENT     │
   └───────────────┬─────────────────┘
                   │  S830
   ┌───────────────┴─────────────────┐
   │     CORRECT SEGMENT POSITION     │
   └───────────────┬─────────────────┘
                   │  S835
              ◇─────────────◇
         ◇                       ◇─── N
         ◇   SATISFY PRECISION?  ◇
              ◇─────────────◇
                   │ Y    S825
   ┌───────────────┴─────────────────┐
   │   STORE AUTHENTICATION TEMPLATE  │
   └───────────────┬─────────────────┘
                   │  S155
        ┌──────────┴───────────┐      ┌──────────────────┐
        │      END OF F1       │      │  TO START OF F2  │
        └──────────────────────┘      └──────────────────┘
```

FIG. 17

```
   ( START OF F2 )
          |
          v
  ACQUIRE GRIPPING FEATURE SAMPLE  ~ S120
          |
          v
      < Smi ≧ Sfmi?  >----N----+
      < (i=1 to n)  >  ~ S130  |
          |                    |
          Y                    |
          v                    |
  LEARN AUTHENTICATION TEMPLATE ~ S135
          |                    |
          v                    |
  STORE AUTHENTICATION TEMPLATE ~ S155
          |
          v
    ( END OF F2 )
```

$Smi \geqq Sfmi?$ (i=1 to n)

FIG. 18

```
   ( START OF F3 )
          |
          v
  ACQUIRE GRIPPING FEATURE SAMPLE  ~ S120
          |
          v
     PERFORM AUTHENTICATION  ~ S160
          |
          v
        < DOES         >
    Y---< AUTHENTICATION>
        < RESULT INDICATE >  ~ S165
        < AUTHORIZED    >
        < USER?         >
          |
          N
          v
   LOCK TERMINAL OPERATION  ~ S180
          |
          v
    ( END OF F3 )
```

## FIG. 19

START OF F4

ACQUIRE GRIPPING FEATURE SAMPLE

S120

EXTRACT FEATURE SEGMENT

S830

CORRECT SEGMENT POSITION

S835

SATISFY PRECISION? —N

Y    S825

STORE AUTHENTICATION TEMPLATE

S155

END OF F4

CORRECT SENSOR POSITIONS

S815

COMPARE TEMPLATE WITH SAMPLE

S820

N— SATISFY PRECISION?

Y    S825

STORE AUTHENTICATION TEMPLATE

S155

TO START OF F2

END OF F4

<div align="center">**INTERNATIONAL SEARCH REPORT**</div>

| | International application No. |
|---|---|
| | PCT/JP2012/060128 |

**A. CLASSIFICATION OF SUBJECT MATTER**
*G06F21/20*(2006.01)i, *H04M1/67*(2006.01)i

According to International Patent Classification (IPC) or to both national classification and IPC

**B. FIELDS SEARCHED**

Minimum documentation searched (classification system followed by classification symbols)
G06F21/20, H04M1/67

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-173930 A (Sony Corp.), 30 June 2005 (30.06.2005), entire text; all drawings (Family: none) | 1-9 |
| A | JP 2009-77221 A (Toshiba Digital Media Engineering Corp.), 09 April 2009 (09.04.2009), entire text; all drawings (Family: none) | 1-9 |
| A | JP 2005-275661 A (Fujitsu Ltd.), 06 October 2005 (06.10.2005), entire text; all drawings (Family: none) | 1-9 |

☐ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 April, 2012 (27.04.12) | 15 May, 2012 (15.05.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 624 162 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001142849 A